# EUROPÄISCHE PATENTSCHRIFT

(11) **EP 2 865 988 B1**
(45) Veröffentlichungstag und Bekanntmachung des Hinweises auf die Patenterteilung: **19.09.2018**
(21) Anmeldenummer: 13189729.0
(22) Anmeldetag: 22.10.2013
(51) Int. Cl.: G01B 11/24, G01B 11/25

(54) **Lichtschnittsensor**
Shape measuring light sensor
Capteur de profil optique

(43) Veröffentlichungstag der Anmeldung: 29.04.2015
(73) Patentinhaber: BAUMER ELECTRIC AG, 8500 Frauenfeld (CH)
(72) Erfinder: Müller, Klaus Friedrich, 69120 Heidelberg (DE); Hochgenug, Walter, 64401 Gross-Bieberau (DE)
(74) Vertreter: Strauss, Steffen

(56) Entgegenhaltungen:
- JP-A- H07 174 537
- US-A1- 2008 312 866

## Beschreibung

Die vorliegende Erfindung betrifft einen Lichtschnittsensor zum Ausgeben wenigstens einer digitalen Ausgabekoordinate.

Aus der JP H07 174537 A ist eine optische Messvorrichtung bekannt, die eine auf ein Objekt projizierte Laserlinie mit einer Kamera erfasst. Bei der Ermittlung der Form des Objekts aus den erfassten Bildern wird die Neigung der Kamera berücksichtigt.

Es ist die der Erfindung zugrundeliegende Aufgabe, ein Verfahren für einen Lichtschnittsensor und einen Lichtschnittsensor nach dem Triangulationsprinzip anzugeben, bei dem der Lichtschnittsensor in unterschiedlichen Neigungen verwendet werden kann, ohne dass eine Ausgabekoordinate von der Neigung beeinflusst wird.

Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch einen Lichtschnittsensor gemäß Anspruch 1 zum Ausgeben einer digitalen Ausgabekoordinate gelöst, mit einer Beleuchtungseinrichtung zum Projizieren einer Lichtlinie auf ein Messobjekt und einer elektronischen Kamera zum Erfassen der projizierten Lichtlinie auf dem Messobjekt. Die Erfassung kann dabei nach dem Triangulationsprinzip oder aber auch nach dem Lichtlaufzeitprinzip erfolgen. Ferner ist eine Verarbeitungseinrichtung zum Bestimmen zumindest einer Messkoordinate in einem Messkoordinatensystem auf Basis der erfassten Lichtlinie und eine Koordinatentransformationseinrichtung zum Transformieren der Messkoordinate aus dem Messkoordinatensystem in die Ausgabekoordinate in einem Ausgabekoordinatensystem mittels einer Koordinatentransformation vorgesehen. Dadurch wird beispielsweise der technische Vorteil erreicht, dass die Ausgabekoordinaten von einem Lichtschnittsensor mit einem Koordinatensystem denjenigen entsprechen, die von einem Lichtschnittsensor in einem anderen Koordinatensystem ausgegeben werden würden. Eine absichtlich schiefe Einstellung des Lichtschnittsensors wird ermöglicht, so dass ein Benutzer große Freiheitsgrade beim Ein- oder zum Anbau des Lichtschnittsensors hat.

In einer vorteilhaften Ausführungsform des Lichtschnittsensors basiert die Koordinatentransformation auf einer Drehmatrix. Dadurch wird beispielsweise der technische Vorteil erreicht, dass die Drehung des Lichtschnittsensors kompensiert werden kann.

In einer weiteren vorteilhaften Ausführungsform des Lichtschnittsensors beschreibt die Drehmatrix eine Drehung des Lichtschnittsensors um einen Neigungswinkel gegenüber einer ebenen Fläche des Messobjektes. Dadurch wird beispielsweise der technische Vorteil erreicht, dass eine Neigung des Lichtschnittsensors kompensiert werden kann.

Erfindungsgemäß umfasst der Lichtschnittsensor eine Neigungswinkelbestimmungseinrichtung zum Bestimmen des Neigungswinkels des Lichtschnittsensors gegenüber einer ebenen Fläche des Messobjekts. Dadurch wird beispielsweise der technische Vorteil erreicht, dass der Neigungswinkel automatisch bestimmt und ausgeglichen werden kann.

In einer weiteren vorteilhaften Ausführungsform des Lichtschnittsensors ist die Neigungswinkelbestimmungseinrichtung ausgebildet, den Neigungswinkel auf Basis der erfassten Lichtlinie zu bestimmen. Dadurch wird beispielsweise der technische Vorteil erreicht, dass die Neigungswinkelbestimmung allein durch den Lichtschnittsensor ohne zusätzliche technische Maßnahmen durchgeführt werden kann.

In einer weiteren vorteilhaften Ausführungsform des Lichtschnittsensors ist die Neigungswinkelbestimmungseinrichtung ausgebildet, den Neigungswinkel auf Basis des längsten geraden Segments der erfassten Lichtlinie zu bestimmen. Dadurch wird beispielsweise der technische Vorteil erreicht, dass es nicht erforderlich ist, Störkonturen zu entfernen.

In einer weiteren vorteilhaften Ausführungsform des Lichtschnittsensors umfasst der Lichtschnittsensor eine Datenschnittstelle zum Eingeben des Neigungswinkels. Dadurch wird beispielsweise der technische Vorteil erreicht, dass der Neigungswinkel von außen vorgegeben werden kann.

In einer weiteren vorteilhaften Ausführungsform des Lichtschnittsensors basiert die Koordinatentransformation auf einem Verschiebungsvektor. Dadurch wird beispielsweise der technische Vorteil erreicht, dass der Nullpunkt des Koordinatensystems versetzt werden kann.

In einer weiteren vorteilhaften Ausführungsform des Lichtschnittsensors ist der Lichtschnittsensor ausgebildet, die Ausgabekoordinate und die Messkoordinate über eine Datenschnittstelle auszugeben. Dadurch wird beispielsweise der technische Vorteil erreicht, dass beide Koordinaten ausgegeben werden, so dass das Messobjekt gleichzeitig aus zwei Richtungen erfasst werden kann.

In einer weiteren vorteilhaften Ausführungsform des Lichtschnittsensors ist die Verarbeitungseinrichtung ausgebildet, die Messkoordinate aus einem vorbestimmten Bildbereich der elektronischen Kamera zu bestimmen. Dadurch wird beispielsweise der technische Vorteil erreicht, dass die Lichtlinie nur in diesem Bildbereich ausgewertet wird und Störkonturen in anderen Bildbereichen vernachlässigt werden können.

In einer weiteren vorteilhaften Ausführungsform des Lichtschnittsensors ist die Koordinatentransformation eine Echtzeit-Koordinatentransformation. Dadurch wird beispielsweise der technische Vorteil erreicht, dass eine zeitlich unmittelbare Ausgabe der Ausgabekoordinate erfolgt.

Gemäß einem zweiten Aspekt der Erfindung wird die Aufgabe durch ein Verfahren gemäß Anspruch 11 zum Ausgeben einer digitalen Ausgabekoordinate mittels eines Lichtschnittsensors gelöst, mit den Schritten eines Projizierens einer Lichtlinie auf ein Messobjekt mittels einer Beleuchtungseinrichtung; eines Erfassens der projizierten Lichtlinie auf dem Messobjekt mittels einer elektronischen Kamera; eines Bestimmens zumindest einer Messkoordinate in einem Messkoordinatensystem auf Basis der erfassten Lichtlinie mittels einer Verarbeitungseinrichtung; und eines Transformierens der Messkoordinate aus dem Messkoordinatensystem in die Ausgabekoordinate in einem Ausgabekoordinatensystem mittels einer Koordinatentransformation durch eine Koordinatentransformationseinrichtung. Dadurch werden die gleichen technischen Vorteile, wie durch den Lichtschnittsensor nach dem ersten Aspekt erreicht.

In einer vorteilhaften Ausführungsform des Verfahrens basiert die Koordinatentransformation auf einer Drehmatrix. Dadurch wird beispielsweise der technische Vorteil erreicht, dass eine Drehung des Lichtschnittsensors ausgeglichen werden kann.

Erfindungsgemäß umfasst das Verfahren den Schritt eines Bestimmens eines Neigungswinkels des Lichtschnittsensors gegenüber einer ebenen Fläche des Messobjekts. Dadurch wird beispielsweise der technische Vorteil erreicht, dass der Neigungswinkel automatisch bestimmt und ausgeglichen werden kann.

In einer weiteren vorteilhaften Ausführungsform des Verfahrens basiert der Schritt des Bestimmens des Neigungswinkels auf der erfassten Lichtlinie. Dadurch wird beispielsweise der technische Vorteil erreicht, dass die Neigungswinkelbestimmung allein durch den Lichtschnittsensor ohne zusätzliche technische Maßnahmen durchgeführt werden kann.

Ausführungsbeispiele der Erfindung sind in den Zeichnungen dargestellt und werden im Folgenden näher beschrieben.

Es zeigen:
- Fig. 1: eine Ansicht eines Lichtschnittsensors in zwei unterschiedlichen Koordinatensystemen;
- Fig. 2: eine schematische Ansicht des Lichtschnittsensors und eines Messobjekts;
- Fig. 3: eine schematische Ansicht des Lichtschnittsensors gegenüber zwei Ebenen; und
- Fig. 4: ein Blockdiagramm eines Verfahrens für einen Lichtschnittsensor.

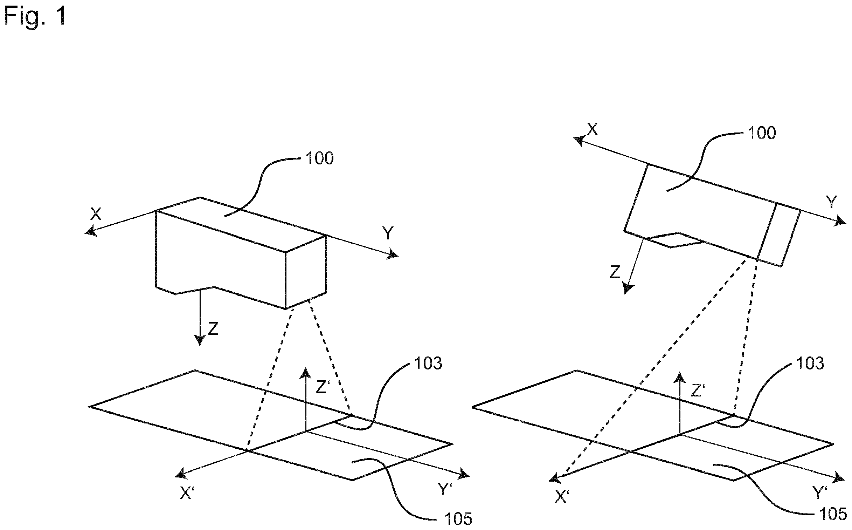

Fig. 1 zeigt eine Ansicht eines Lichtschnittsensors 100 mit jeweils zwei unterschiedlichen Koordinatensystemen - ein Messkoordinatensystem X, Y, Z und ein Ausgabekoordinatensystem X', Y', Z'. Der Lichtschnittsensor 100 umfasst eine Beleuchtungseinrichtung als Linienprojektor, die eine möglichst schmale und helle Lichtlinie 103 auf das Messobjekt 105 projiziert, beispielsweise ein Laser. Zusätzlich umfasst der Lichtschnittsensor 100 eine elektronische Kamera, die die Projektion der Linie auf dem Messobjekt 105 beobachtet und erfasst. Eine Verschiebung oder Veränderung der Lichtlinie 103 im Kamerabild wird mit den Methoden der Photogrammetrie durch eine Verarbeitungseinrichtung in Koordinaten umgerechnet.

Der Lichtschnittsensor 100 erfasst ein zweidimensionales Profil eines Messobjekts 105. Das Profil ist bereits auf den Lichtschnittsensor 100 kalibriert, so dass die Ausgabekoordinaten als Daten in Form von X- und Z-Koordinaten vorliegen, beispielsweise in mm.

In einem ersten Koordinatensystem X, Y, Z ist der Lichtschnittsensor 100 beispielsweise senkrecht oberhalb eines Messobjektes 105 angeordnet, das durch eine ebene Fläche gebildet wird. Auf die ebene Fläche des Messobjektes 105 wird die Lichtlinie 103 projiziert. Das Messobjekt 105 ist beispielsweise eine Stoffbahn, die unter dem Lichtschnittsensor 100 vorbeigeführt wird. Der Lichtschnittsensor 100 ermittelt beispielsweise die Koordinaten einer Kante der Stoffbahn als Messkoordinaten im Messkoordinatensystem X, Y, Z. Dabei ist X' parallel X und Z' parallel Z. Ein Ausgabekoordinatensystem X', Y', Z', in dem die Koordinaten von dem Lichtschnittsensor 100 ausgegeben werden sollen, ist auf dem Messobjekt 105 angeordnet und an diesem ausgerichtet.

In einem anderen Koordinatensystem X, Y, Z ist der Lichtschnittsensor 100 um die Y-Achse gegenüber dem Messobjekt 105 geneigt. Die Lichtlinie 103 wird schräg auf das Messobjekt 105 geworfen. In diesem Fall ermittelt der Lichtschnittsensor 100 beispielsweise die Koordinaten einer Kante der Stoffbahn als Messkoordinaten im geneigten Messkoordinatensystem X, Y, Z. Auch in diesem Fall sollen die Koordinaten in einem Ausgabekoordinatensystem X', Y', Z' von dem Lichtschnittsensor 100 ausgegeben werden, das auf dem Messobjekt 105 angeordnet ist und an diesem ausgerichtet ist. Eine Umrechnung in das Ausgabekoordinatensystem X', Y', Z' erfolgt im Sensor, wie nachstehend beschrieben.

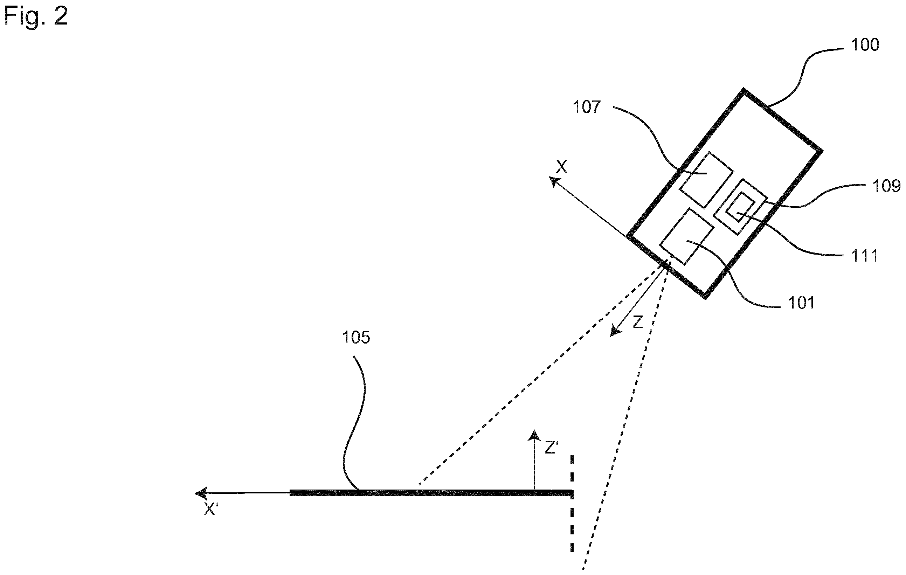

Fig. 2 zeigt eine schematische Ansicht des Lichtschnittsensors 100 und eines Messobjekts 105. Der Lichtschnittsensors 100 ist geneigt gegenüber dem Messobjekt 105 angeordnet. Der Lichtschnittsensor 100 umfasst die Beleuchtungseinrichtung 101 zum Projizieren der Lichtlinie 103 auf das Messobjekt 105, die elektronische Kamera 107 zum Erfassen der projizierten Lichtlinie 103 auf dem Messobjekt 105; die Verarbeitungseinrichtung 109 zum Bestimmen zumindest einer Messkoordinate in dem Messkoordinatensystem X, Y, Z auf Basis der erfassten Lichtlinie 103. Die Verarbeitungseinrichtung 109 umfasst beispielsweise einen Prozessor, der in der Lage ist, die von der elektronischen Kamera 107 erfasste Lichtlinie 103 datenmäßig zu verarbeiten und digitale Ausgabekoordinaten zu erzeugen.

Zusätzlich umfasst der Lichtschnittsensor 100 eine Koordinatentransformationseinrichtung 111 zum Transformieren der Messkoordinate aus dem Messkoordinatensystem X, Y, Z in die Ausgabekoordinate in dem Ausgabekoordinatensystem X', Y', Z' mittels einer Koordinatentransformation. Die Koordinatentransformationseinrichtung 111 ist in den Lichtschnittsensor 100 integriert. Dadurch gibt der Lichtschnittsensor 100 eine digitale Ausgabekoordinate aus, die der transformierten Koordinaten entspricht. Die tranformierten Koordinaten entsprechen einer anderen Ausrichtung als der tatsächlichen Ausrichtung des Sensors. Die Koordinatentransformationseinrichtung 111 kann durch ein Programm realisiert sein, dass durch die Verarbeitungseinrichtung 109 ausgeführt wird.

Durch die Koordinatentransformationseinrichtung 111 ist der Lichtschnittsensor 100 beispielsweise geeignet, die gleichen Ausgabekoordinaten auszugeben wie ein Lichtschnittsensor 100 der in einem Ausgabekoordinatensystem X', Y', Z' angeordnet ist, das orthogonal auf dem Messobjekt 105 steht. Die Koordinatentransformation beruht beispielsweise auf einer Drehmatrix und/oder einem Verschiebungsvektor.

Um einen Neigungswinkel für die Koordinatentransformation zu erhalten, umfasst der Lichtschnittsensor 100 erfindungsgemäß eine Neigungswinkelbestimmungseinrichtung zum automatischen Bestimmen des Neigungswinkels des Lichtschnittsensors 100 gegenüber einer ebenen Fläche des Messobjekts 105. Die Neigungswinkelbestimmungseinrichtung verwendet beispielsweise die projizierte Lichtlinie 103 die von dem zuvor kalibrierten Lichtschnittsensor 100 auf das Messobjekt geworfen wird. Durch die Verarbeitungseinrichtung kann dann anhand einer einzigen Linie ein Neigungswinkel des Lichtschnittsensors 100 gegenüber einer ebenen Fläche des Messobjektes 105 bestimmt werden. Falls die erfasste Lichtlinie 103 in mehrere Linien unterteilt sein sollte, wie dies bei der Projektion auf profilierte Messobjekte 105 geschehen kann, wird von der Verarbeitungseinrichtung 109 derjenige gerade Linienabschnitt mit der größten Länge verwendet, um den Neigungswinkel zu berechnen. Der Abstand und der Winkel dieser Linienabschnitte können von dem Lichtschnittsensor 100 erfasst werden. Der kalibrierte Lichtschnittsensor 100 erzeugt mit Hilfe der längsten geraden erfassten Linie im Messbereich als Referenzlinie ein Referenzkoordinatensystem als Ausgabekoordinatensystem X', Y', Z'. Der Lichtschnittsensor 100 erzeugt dann in Echtzeit durch die Koordinatentransformation der Messkoordinaten des Lichtschnittsensors 100 Ausgabekoordinaten X', Y', Z' des Ausgabekoordinatensystem X', Y', Z' und gibt diese aus. Dies bietet den Vorteil, dass Störkonturen das Ergebnis nicht beeinträchtigen.

Insgesamt kann ein Verschiebungsvektor und eine Transformationsmatrix berechnet werden, mit deren Hilfe die Messkoordinate aus dem Messkoordinatensystem des Lichtschnittsensors 100 in eine Ausgabekoordinate in einem Ausgabekoordinatensystem X', Y', Z' als Bezugssystem transformiert werden kann. Die Nulllinie, d.h. die X'-Achse bei Z'=0, kann außer in der gemessenen Lichtlinie durch den Verschiebungsvektor um einen wählbaren Betrag (Offset-Wert) davor oder dahinter angeordnet werden. Das Ende der Lichtlinie, die als Referenz benutzt wurde, kann jedoch auch als Nullpunkt der X'-Achse definiert werden.

Nach der Koordinatentransformation können alle Auswertemethoden auf dieses neue Profil angewendet werden. Sowohl die Bestimmung der Bezugsebene als auch die Umrechnung der Ausgabe wird im Lichtschnittsensor 100 durchgeführt. Dadurch kann ein einfacher und leicht zu bedienender Lichtschnittsensor 100 realisiert werden, der ähnlich zu Laserdistanzsensoren oder Zeilensensoren arbeitet.

Die Definition des Messbereichs und des Koordinatensystems des Lichtschnittsensors 100 kann durch Einlernen (Einteachen) des Lichtschnittsensors 100 erfolgen. Beispielsweise wählt der Lichtschnittsensor 100 nach dem Einlernen einer Referenz seinen Messbereich in einem vordefinierten Rechteck um diese Referenz zur Unterdrückung von Störungen anderer Konturen zu verwenden.

Durch die automatische Neigungswinkelbestimmungseinrichtung können im Gegensatz zu einem Lichtschnittsensor 100, mit dem nur Abstände und Höhen oder Breiten und Kantenpositionen des Messobjektes gemessen werden, Einstellungsfehler vermieden werden, die durch schiefes Anbauen des Lichtschnittsensors 100 entstehen können. Zudem wird eine absichtlich schiefe Einstellung des Lichtschnittsensors 100 in Bezug auf die Messrichtung ermöglicht, so dass ein Benutzer eine hohe Freiheit beim Einbau und Ausrichten des Lichtschnittsensors 100 hat und einfach zu bedienen ist. Durch die Neigung des Lichtschnittsensors 100 wird eine Bahnkantenmessung außerhalb der Bahn und schrägem Aufblick ermöglicht. Es entsteht ein hoher Nutzen.

Daneben kann auch eine Datenschnittstelle vorgesehen sein, über die ein Neigungswinkel, statt einer automatischen Bestimmung des Lichtschnittsensors 100, von außen in die Verarbeitungseinrichtung 109 eingegeben werden kann, beispielsweise mittels einer Computerschnittstelle.

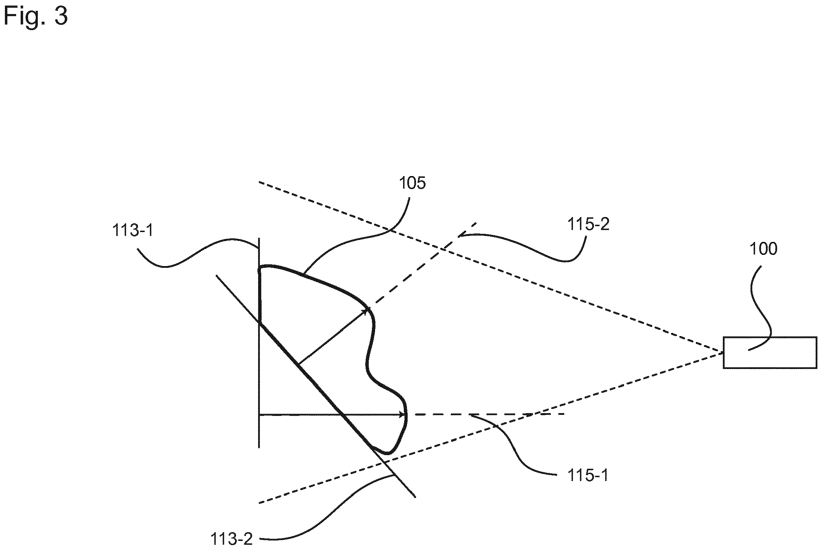

Fig. 3 zeigt eine schematische Ansicht des Lichtschnittsensors 100 gegenüber zwei Bezugsebenen 113-1 und 113-2. Der Lichtschnittsensor 100 zielt zunächst auf eine der Bezugsebenen 113-1 und 113-2. Wenn der Lichtschnittsensor 100 vorkalibriert ist, kann dieser erfassen, dass es sich bei den Bezugsebenen 113-1 und 113-2 um ebene Flächen handelt. Wenn der Lichtschnittsensor 100 vorkalibriert ist, kann eine Lichtschnittlinie 103 als tatsächliche Gerade erfasst werden. Dadurch wird ein automatisches Antasten des Messobjektes 105 aus einer bestimmten Richtung 115-1 oder 115-2 ermöglicht.

Das Antasten aus den Richtungen 115-1 oder 115-2 erfolgt zur Vermessung des Messobjekts 105 gegenüber den Bezugsebenen 113-1 und 113-2. Dabei steht die Richtung 115-1 senkrecht auf der Bezugsebene 113-1 und die Richtung 115-2 senkrecht auf der Bezugsebene 113-2. Das Messobjekt 105 ist beispielweise ein Kunststoffprofil, das an den beiden Bezugsebenen 113-1 und 113-2 anliegt.

In einem ersten Koordinatensystem wird durch den Lichtschnittsensor 100 der Abstand des Messobjekts 105 in der ersten Richtung 115-1 gegenüber der ersten Bezugsebene 113-1 bestimmt. Nach einer Koordinatentransformation kann in einem zweiten Koordinatensystem durch den Lichtschnittsensor 100 der Abstand des Messobjekts 105 in der zweiten Richtung 115-1 gegenüber der zweiten Bezugsebene 113-1 bestimmt werden, ohne dass der Lichtschnittsensor 100 dazu in seiner Lage verändert werden muss.

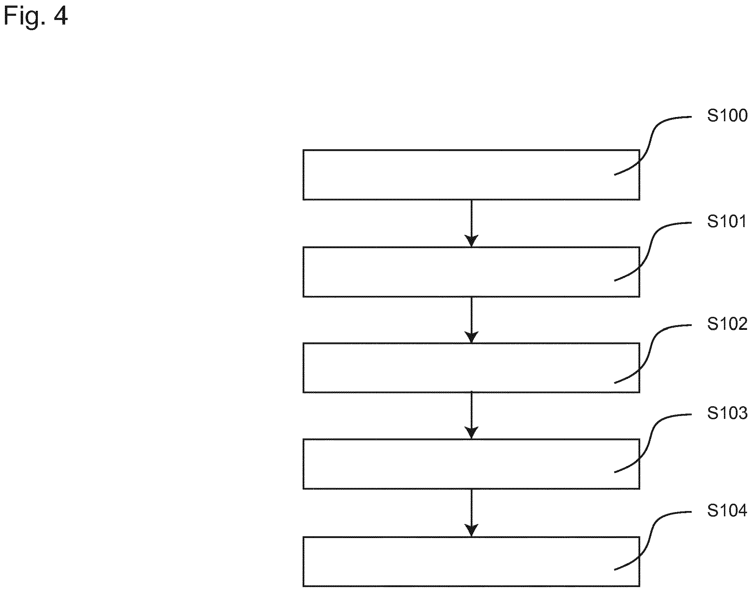

Fig. 4 zeigt ein Blockdiagramm eines Verfahrens für einen Lichtschnittsensor 100 zum Ausgeben einer digitalen Ausgabekoordinate. Das Verfahren umfasst die Schritte eines automatischen Bestimmens S100 eines Neigungswinkels des Lichtschnittsensors 100 gegenüber einer ebenen Fläche des Messobjekts 105, eines Projizierens S101 einer Lichtlinie 103 auf das Messobjekt 105 mittels einer Beleuchtungseinrichtung 101, eines Erfassens S102 der projizierten Lichtlinie 103 auf dem Messobjekt 105 mittels der elektronischen Kamera 107, eines Bestimmens S103 zumindest einer Messkoordinate in dem Messkoordinatensystem X, Y, Z auf Basis der erfassten Lichtlinie 103 mittels der Verarbeitungseinrichtung 109 und eines Transformierens S104 der Messkoordinate aus dem Messkoordinatensystem X, Y, Z in die Ausgabekoordinate in dem Ausgabekoordinatensystem X', Y, Z' mittels einer Koordinatentransformation durch eine Koordinatentransformationseinrichtung 111.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

## Patentansprüche

1. Lichtschnittsensor (100) zum Ausgeben einer digitalen Ausgabekoordinate, mit einer Beleuchtungseinrichtung (101) zum Projizieren einer Lichtlinie (103) auf ein Messobjekt (105);
einer elektronischen Kamera (107) zum Erfassen der projizierten Lichtlinie (103) auf dem Messobjekt (105);
einer Verarbeitungseinrichtung (109) zum Bestimmen zumindest einer Messkoordinate in einem Messkoordinatensystem (X, Y, Z) auf Basis der erfassten Lichtlinie (103); und einer Koordinatentransformationseinrichtung (111) zum Transformieren der Messkoordinate aus dem Messkoordinatensystem (X, Y, Z) in die Ausgabekoordinate in einem Ausgabekoordinatensystem (X', Y', Z') mittels einer Koordinatentransformation, wobei der Lichtschnittsensor eine Neigungswinkelbestimmungseinrichtung zum Bestimmen des Neigungswinkels des Lichtschnittsensors (100) gegenüber einer ebenen Fläche des Messobjekts (105) umfasst.

2. Lichtschnittsensor (100) nach Anspruch 1, **dadurch gekennzeichnet, dass** die Neigungswinkelbestimmungseinrichtung ausgebildet ist, den Neigungswinkel auf Basis der erfassten Lichtlinie (103) zu bestimmen.

3. Lichtschnittsensor (100) nach Anspruch 2, **dadurch gekennzeichnet, dass** die Neigungswinkelbestimmungseinrichtung ausgebildet ist, den Neigungswinkel auf Basis des längsten geraden Segments der erfassten Lichtlinie (103) zu bestimmen.

4. Lichtschnittsensor (100) nach Anspruch 1, **dadurch gekennzeichnet, dass** die Koordinatentransformation auf einer Drehmatrix basiert.

5. Lichtschnittsensor (100) nach Anspruch 1, **dadurch gekennzeichnet, dass** die Drehmatrix eine Drehung des Lichtschnittsensors (100) um einen Neigungswinkel gegenüber einer ebenen Fläche des Messobjektes (105) beschreibt.

6. Lichtschnittsensor (100) nach einem der Ansprüche 2 bis 5, **dadurch gekennzeichnet, dass** der Lichtschnittsensor (100) eine Datenschnittstelle zum Eingeben des Neigungswinkels umfasst.

7. Lichtschnittsensor (100) nach einem der vorangehenden Ansprüche, **dadurch gekennzeichnet, dass** die Koordinatentransformation auf einem Verschiebungsvektor basiert.

8. Lichtschnittsensor (100) nach einem der vorangehenden Ansprüche, **dadurch gekennzeichnet, dass** der Lichtschnittsensor (100) ausgebildet ist, die Ausgabekoordinate und die Messkoordinate über eine Datenschnittstelle auszugeben.

9. Lichtschnittsensor (100) nach einem der vorangehenden Ansprüche, **dadurch gekennzeichnet, dass** die Verarbeitungseinrichtung (109) ausgebildet ist, die Messkoordinate aus einem vorbestimmten Bildbereich der elektronischen Kamera (107) zu bestimmen.

10. Lichtschnittsensor (100) nach einem der vorangehenden Ansprüche, **dadurch gekennzeichnet, dass** die Koordinatentransformation eine Echtzeit-Koordinatentransformation ist.

11. Verfahren zum Ausgeben einer digitalen Ausgabekoordinate mittels eines Lichtschnittsensors (100) gemäß Anspruch 1, mit den Schritten:
- Bestimmen (S100) eines Neigungswinkels des Lichtschnittsensors (100) gegenüber einer ebenen Fläche des Messobjekts (105);
- Projizieren (S101) einer Lichtlinie (103) auf ein Messobjekt (105) mittels einer Beleuchtungseinrichtung (101);
- Erfassen (S102) der projizierten Lichtlinie (103) auf dem Messobjekt (105) mittels einer elektronischen Kamera (107);
- Bestimmen (S103) zumindest einer Messkoordinate in einem Messkoordinatensystem auf Basis der erfassten Lichtlinie (103) mittels einer Verarbeitungseinrichtung (109), und
- Transformieren (S104) der Messkoordinate aus dem Messkoordinatensystem (X, Y, Z) in die Ausgabekoordinate in einem Ausgabekoordinatensystem (X', Y', Z') mittels einer Koordinatentransformation durch eine Koordinatentransformationseinrichtung (111).

12. Verfahren nach Anspruch 11, **dadurch gekennzeichnet, dass** die Koordinatentransformation auf einer Drehmatrix basiert.

13. Verfahren nach Anspruch 11, **dadurch gekennzeichnet, dass** der Schritt des Bestimmens des Neigungswinkels auf der erfassten Lichtlinie (103) basiert.

## Claims

1. Optical sectioning sensor (100) for outputting a digital output coordinate, with an illumination device (101) for projecting a light line (103) onto an object to be measured (105);
an electronic camera (107) for recording the light line (103) projected onto the object to be measured (105);
a processing device (109) for determining at least one measuring coordinate in a measuring coordinate system (X, Y, Z) on the basis of the recorded light line (103); and a coordinate transformation device (111) for transforming the measuring coordinates from the measuring coordinate system (X, Y, Z) into the output coordinates in an output coordinate system (X', Y', Z') by means of a coordinate transformation, whereby the optical sectioning sensor comprises an inclination angle determination device for determining the inclination angle of the optical sectioning sensor (100) in relation to a plane surface of the object to be measured (105).

2. Optical sectioning sensor (100) In accordance with Claim 1, **characterized in that** the inclination angle determination device is designed to determine the inclination angle on the basis of the recorded light line (103).

3. Optical sectioning sensor (100) In accordance with Claim 2, **characterized in that** the inclination angle determination device is designed to determine the inclination angle on the basis of the longest straight segment of the recorded light line (103).

4. Optical sectioning sensor (100) in accordance with Claim 1, **characterized in that** the coordinate transformation is based on a rotation matrix.

5. Optical sectioning sensor (100) in accordance with Claim 1, **characterized in that** the rotation matrix describes a rotation of the optical sectioning sensor (100) by an inclination angle in relation to a plane surface of the object to be measured (105).

6. Optical sectioning sensor (100) in accordance with any one of Claims 2 to 5, **characterized in that** the optical sectioning sensor (100) comprises a data interface for entering the inclination angle.

7. Optical sectioning sensor (100) in accordance with any one of the preceding claims, **characterized in that** the coordinate transformation is based on a displacement vector.

8. Optical sectioning sensor (100) in accordance with any one of the preceding claims, **characterized in that** the optical sectioning sensor (100) is designed to output the output coordinates and the measuring coordinates by means of a data interface.

9. Optical sectioning sensor (100) in accordance with any one of the preceding claims, **characterized in that** the processing device (109) is designed to determine the measuring coordinates from a predetermined image area of the electronic camera (107).

10. Optical sectioning sensor (100) in accordance with any one of the preceding claims, **characterized in that** the coordinate transformation is a real-time coordinate transformation.

11. Procedure for outputting a digital output coordinate by means of an optical sectioning sensor (100) in accordance with Claim 1, with the following steps:
- Determining (S100) an inclination angle of the optical sectioning sensor (100) in relation to a plane surface of the object to be measured (105);
- Projecting (S101) a light line (103) onto an object to be measured (105) by means of an illumination device (101);
- Recording (S102) the projected light line (103) on the object to be measured (105) by means of an electronic camera (107);
- Determining (S103) at least one measuring coordinate in a measuring coordinate system on the basis of the recorded light line (103) by means of a processing device (109), and
- Transforming (S104) the measuring coordinates from the measuring coordinate system (X, Y, Z) into the output coordinates in an output coordinate system (X', Y', Z') by means of a coordinate transformation performed by a coordinate transformation device (111).

12. Procedure in accordance with Claim 11, **characterized in that** the coordinate transformation is based on a rotation matrix.

13. Procedure in accordance with Claim 11, **characterized in that** the step of determining the inclination angle is based on the recorded light line (103).

## Revendications

1. Détecteur « light section » (100) permettant de émettre une coordonnée de sortie numérique, avec un dispositif d'éclairage (101) permettant de projeter une ligne lumineuse (103) sur un objet à mesurer (105) ;
une caméra électronique (107) permettant de détecter une ligne lumineuse (103) projetée sur l'objet à mesurer (105) ;
un dispositif de traitement (109) permettant de déterminer au moins une coordonnée de mesure dans un système de coordonnées de mesure (X, Y, Z) sur la base de la ligne lumineuse (103) détectée ; et un dispositif de transformation de coordonnées (111) permettant de transformer la coordonnée de mesure du système de coordonnées de mesure (X, Y, Z) en coordonnée de sortie dans un système de coordonnées de sortie (X', Y', Z') au moyen d'une transformation de coordonnées, le détecteur « light section » comprenant un dispositif de détermination d'angle d'inclinaison permettant de déterminer l'angle d'inclinaison du détecteur « light section » (100) par rapport à une surface plane de l'objet à mesurer (105).

2. Détecteur « light section » (100) selon la revendication 1, **caractérisé en ce que** le dispositif de détermination d'angle d'inclinaison est conçu pour déterminer l'angle d'inclinaison sur la base de la ligne lumineuse (103) détectée.

3. Détecteur « light section » (100) selon la revendication 2, **caractérisé en ce que** le dispositif de détermination d'angle d'inclinaison est conçu pour déterminer l'angle d'inclinaison sur la base du segment droit le plus long de la ligne lumineuse (103) détectée.

4. Détecteur « light section » (100) selon la revendication 1, **caractérisé en ce que** la transformation des coordonnées est basée sur une matrice de rotation.

5. Détecteur « light section » (100) selon la revendication 1, **caractérisé en ce que** la matrice de rotation décrit une rotation du détecteur « light section »(100) autour d'un angle d'inclinaison par rapport à une surface plane de l'objet à mesurer (105).

6. Détecteur « light section » (100) selon l'une des revendications 2 à 5, **caractérisé en ce que** le détecteur « light section » (100) comprend une interface de données pour saisir l'angle d'inclinaison.

7. Détecteur « light section » (100) selon l'une des revendications précédentes, **caractérisé en ce que** la transformation des coordonnées est basée sur un vecteur de déplacement.

8. Détecteur « light section » (100) selon l'une des revendications précédentes, **caractérisé en ce que** le détecteur « light section » (100) est conçu pour émettre la coordonnée de sortie et la coordonnée de mesure via une interface de données.

9. Détecteur « light section » (100) selon l'une des revendications précédentes, **caractérisé en ce que** le dispositif de traitement (109) est conçu pour déterminer la coordonnée de mesure à partir d'une zone d'image prédéfinie de la caméra électronique (107).

10. Détecteur « light section » (100) selon l'une des revendications précédentes, **caractérisé en ce que** la transformation de coordonnées est une transformation de coordonnées en temps réel.

11. Procédé permettant d'émettre une coordonnée de sortie numérique au moyen d'un détecteur « light section » (100) selon la revendication 1, comprenant les étapes consistant à :
- déterminer (S100) un angle d'inclinaison du détecteur « light section »(100) par rapport à une surface plane de l'objet à mesurer (105) ;
- projeter (S101) une ligne lumineuse (103) sur un objet à mesurer (105) au moyen d'un dispositif d'éclairage (101) ;
- détecter (S102) la ligne lumineuse (103) projetée sur l'objet à mesurer (105) au moyen d'une caméra électronique (107) ;
- déterminer (S103) au moins une coordonnée de mesure dans un système de coordonnées de mesure sur la base de la ligne lumineuse (103) détectée au moyen d'un dispositif de traitement (109), et
- transformer (S104) la coordonnée de mesure du système de transformation de coordonnées de mesure (X, Y, Z) en coordonnée de sortie dans un système de coordonnées de sortie (X', Y', Z') au moyen d'une transformation de coordonnées à travers un dispositif de transformation de coordonnées (111).

12. Procédé selon la revendication 11, **caractérisé en ce que** la transformation des coordonnées est basée sur une matrice de rotation.

13. Procédé selon la revendication 11, **caractérisé en ce que** l'étape de la détermination de l'angle d'inclinaison est basée sur la ligne lumineuse (103) détectée.
